# EUROPEAN PATENT APPLICATION

(11) **EP 4 521 150 A1**
(43) Date of publication of application: **12.03.2025**
(21) Application number: 24197482.3
(22) Date of filing: 30.08.2024
(51) Int. Cl.: G02B 6/38, G02B 6/44

(54) **DISTRIBUTION FRAME OF A FIBER OPTIC NETWORK WITH IMPROVED ADAPTER FASTENING**

(30) Priority: 06.09.2023 US 202363536734 P
(71) Applicant: Corning Research & Development Corporation, Corning, New York 14831 (US)
(72) Inventor: DAGLEY, Mark Robert, Haslet, 76052 (US); RODRIGUEZ, Diana, Mansfield, 76063 (US)
(74) Representative: Reddie & Grose LLP

(57) **Abstract**

A distribution frame of a fiber optic network includes a host attached to the distribution frame and a plurality of bezels. The host includes a plurality of ports wherein each of the plurality of ports receives an adapter bank therein. Each of the plurality of bezels includes a bezel body and a bezel fastener and is releasably received in a respective one of the ports by the bezel fastener. Moreover, each of the bezels is configured to receive the adapter bank in a snap-fit connection. A fiber optic cable assembly having a connection interface that includes the adapter bank as part of of the cable assembly is also disclosed. Furthermore, a method of connecting fiber optic cables at a distribution frame of a fiber optic network is disclosed.

## Description

### Priority Application

This application claims the benefit of priority of U.S. Provisional Application No. 63/536,734, filed on September 6, 2023, the content of which is relied upon and incorporated herein by reference in its entirety.

### Technical Field

This disclosure relates generally to fiber optic connectivity, and more particularly to a fiber optic distribution frame with a host that receives an adapter bank using an improved adapter fastening system, and a method of fastening an adapter bank to the host of the distribution frame using the improved adapter fastening system.

### Background

The large amount of data and other information transmitted over the internet has led businesses and other organizations to develop large scale data centers for organizing, processing, storing and/or disseminating large amounts of data. Data centers contain a wide range of network equipment including, for example, servers, networking switches, routers, storage subsystems, etc. Data centers further include a large amount of cabling and equipment racks to organize and interconnect the network equipment in the data center. Modern data centers may include multi-building campuses having, for example, one primary or main building and a number of auxiliary buildings in close proximity to the main building. All the buildings on the campus are interconnected by a local fiber optic network.

Data center design and cabling-infrastructure architecture are increasingly large and complex. To manage the interconnectivity of a data center, the network equipment within the buildings on the data center campus is often arranged in structured data halls having a large number of spaced-apart rows. Each of the rows is, in turn, configured to receive a number of equipment racks or cabinets (e.g., twenty racks or cabinets) which hold the network equipment. In some data center architectures, each of the rows or a pair of rows includes an intermediate distribution frame (sometimes referred to as a main patch panel) at a front or head end of the row. Distribution cables with a relatively large number of optical fibers (high fiber counts) are routed from a building distribution frame (sometimes referred to as a main distribution frame) to the intermediate distribution frame for the different rows of equipment racks. At each intermediate distribution frame, a large number of distribution fiber optic cables with lower fiber counts are connected to the optical fibers of the associated high fiber count distribution cable(s) and routed along the row to connect to the network equipment held in the various racks in the row. To organize the large number of in-row distribution fiber optic cables (referred to as row distribution cables), each row typically includes a cable tray or basket disposed above the row for supporting the row distribution cables as they extend along the row. The network equipment in the racks is optically connected to the row distribution cables by technicians during the construction of the data center using a large number of jumper cables, for example.

As the demand for data transmission and other information has increased in recent years, network equipment within the racks has been upgraded to enable more optical connections within the rack footprint, thereby increasing the optical connection density of the rack. Consequently, each row of equipment racks now possesses a higher optical connection capacity, which requires more optical connections be made at the intermediate distribution frame. Making the fiber optic connections between the fiber optic cables from the main distribution frame and the fiber optic cables extending to the network equipment in the racks of the row at the intermediate distribution frame is a labor intensive and time-consuming process, which ultimately increases the costs for data center construction.

For example, in a conventional installation, the intermediate distribution frame may include one or more hosts for receiving a plurality of adapters, such as in the form of a plurality of adapter banks. The adapter banks may be fixedly secured to the host, such as with a screw or the like, or secured to the host through a clip. The adapter banks are typically inserted from a rear side of the host into openings in the host and are prevented from moving through the openings onto a front side of the host. After the adapter banks are secured to the host, technicians will start inserting connectors from the fiber optic cables of the main distribution frame into the connector ports on the rear side of the adapter banks. Technicians will also start inserting connectors from the row distribution cables extending to the network equipment in the racks of the row into the connector ports on the front side of the adapter banks. The number of fiber optic connections being made in the intermediate distribution frame is high and is expected to increase in the future. Consequently, the amount of labor and time needed to form the fiber optic connections at the intermediate distribution frame is also expected to increase, thereby further increasing the construction costs of the data center.

Therefore, manufacturers of fiber optic equipment seek improved devices and methods that decrease the amount of labor and time needed to make optical connections between fiber optic cables at distribution frames of a fiber optic network.

### Summary

In one aspect of the disclosure, a distribution frame of a fiber optic network for connecting fiber optic cables using an improved adapter fastening system is disclosed. The distribution frame includes at least one host attached to the distribution frame and a plurality of bezels. The at least one host includes a plurality of host ports wherein each of the plurality of host ports is configured to receive an adapter bank therein. Each of the plurality of bezels includes a bezel body and at least one bezel fastener connected to the bezel body. Each of the plurality of bezels is releasably received in a respective one of the plurality of host ports in the at least one host by the at least one bezel fastener. Moreover, each of the plurality of bezels is configured to receive the adapter bank in a snap-fit connection in order to mount the adapter bank to the at least one host of the distribution frame.

In one embodiment, each of the plurality of bezels may include a generally rectangular bezel body defining an interior cavity, wherein the interior cavity is configured to receive the adapter bank in the snap-fit connection. In one embodiment, the bezel body of each of the plurality of bezels may include at least one adapter fastener interface for receiving at least one adapter fastener associated with the adapter bank in the snap-fit connection. For example, in one embodiment, the at least one adapter fastener interface may include at least one pair of apertures on opposed sides of the bezel body. In another embodiment, multiple pairs of apertures may be provided.

In one embodiment, the at least one bezel fastener may include a pair of bezel fasteners on opposed sides of the bezel body. For example, in one embodiment, the at least one bezel fastener may include at least one bezel clip. The at least one bezel clip is moveable between a release position, where the bezel is releasable from the respective one of the plurality of host ports, and a retained position, where the bezel is retained in the respective one of the plurality of host ports. In one embodiment, the at least one bezel clip may be biased toward the retained position such that a force, such as a manual force from a technician, is required to move the at least one bezel clip from the retained position to the release position. Once the force is released, the at least one bezel clip will move back to its retained position under a biasing force from the bezel clip. In one embodiment, the at least one bezel clip may include a spring arm having a first end connected to the bezel body and a second end opposite the first end, and a finger tab at the second end of the spring arm for moving the spring clip from the retained position to the release position, such as by the technician.

In one embodiment, each of the plurality of bezels may be configured for only unidirectional insertion into a respective one of the plurality of host ports on the at least one host. For example, each of the plurality of bezels may include a flange that is oversized so as to prevent the bezel from passing through the port in the host. In this way, each of the plurality of bezels may be inserted into the at least one host from only one side of the at least one host, such as from a front side of the at least one host. In one embodiment, the at least one host may include at least one panel.

In another aspect of the disclosure, a fiber optic network having such a distribution frame is disclosed. The fiber optic network includes at least one first fiber optic cable including a plurality of first fiber optic connectors, at least one second fiber optic cable including a plurality of second fiber optic connectors, and the distribution frame according to the first aspect described above. The fiber optic network further includes a plurality of adapter banks, wherein each of the plurality of adapter banks is received in a respective one of the plurality of bezels through the snap-fit connection. Each of the plurality of adapter banks includes a first side having a plurality of first connector ports and a second side having a plurality of second connector ports. Moreover, at least some of the plurality of first fiber optic connectors are connected to a respective one of the plurality of first connector ports on the first side of the plurality of adapter banks, and at least some of the plurality of second fiber optic connectors are connected to a respective one of the plurality of second connector ports on the second side of the plurality of adapter banks.

In one embodiment, each of the plurality of adapter banks may include an adapter body defining the first side with the plurality of first connector ports and the second side with the plurality of second connector ports, and an adapter bank band disposed about the adapter body, wherein the adapter bank band includes an adapter bank band body and at least one adapter fastener for connecting the adapter bank to the at least one adapter fastener interface on a respective one of the plurality of bezels. In one embodiment, the at least one adapter fastener may include a pair of adapter fasteners on opposed sides of the adapter bank band. In an exemplary embodiment, the at least one adapter fastener may include at least one adapter clip. The at least one adapter clip is moveable between an extended position, where the adapter bank is engaged with the respective one of the plurality of bezels, and a retracted position, where the adapter bank is disengaged from the respective one of the plurality of bezels. In one embodiment, the at least one adapter clip may be biased toward the extended position such that a force, such as a contact force with the bezel, is required to move the at least one adapter clip from the extended position to the retracted position. Once the force is released, the at least one adapter clip will move back to its extended position under a biasing force from the adapter clip. In one embodiment, the at least one adapter clip may include a spring arm having a first end connected to the adapter bank band body and a second end opposite the first end, and a detent at the second end of the spring arm.

In one embodiment, each of the plurality of adapter banks is configured for only unidirectional insertion into a respective one of the plurality of bezels. For example, each of the plurality of adapter banks may include a flange that is oversized to prevent the adapter bank from passing through the interior cavity of the bezel. In this way, each of the plurality of adapter banks may be inserted into a respective one of the plurality of bezels from only one side of the bezel, such as from a rear side of the bezel.

In one embodiment, each of the plurality of adapter banks may include a plurality of separate adapters bound together by the adapter bank band, and each of the plurality of separate adapters may include a first side with at least one first connector port and a second side with at least one second connector port.

In another aspect of the disclosure, a fiber optic cable assembly having an adapter bank formed as part of the fiber optic cable assembly is disclosed. The fiber optic cable assembly includes a fiber optic cable having a first end, a second end, and carrying a plurality of optical fibers and at least one connection interface at the first end of the fiber optic cable. The at least one connection interface includes a plurality of connectors terminating at least some of the plurality of optical fibers at the first end of the fiber optic cable and at least one adapter bank. The at least one adapter bank includes an adapter bank body defining a first side having a plurality of first connector ports and a second side having a plurality of second connector ports, and an adapter bank band disposed about the adapter bank. The adapter bank band includes an adapter bank band body and at least one adapter fastener for connecting the at least one connection interface to a distribution frame of a fiber optic network in a snap-fit connection. At least some of the plurality of connectors are received in a respective one of the plurality of second connector ports on the second side of the at least one adapter bank such that the at least one adapter bank becomes part of the connection interface.

In one embodiment, the at least one adapter fastener may include a pair of adapter fasteners on opposed sides of the adapter bank band. In one embodiment, the at least one adapter fastener may include at least one adapter clip. The at least one adapter clip is moveable between an extended position, where the adapter bank is engaged with the fiber optic distribution frame, and a retracted position, where the adapter bank is disengaged from the fiber optic distribution frame. In one embodiment, the at least one adapter clip may include a spring arm having a first end connected to the adapter bank band body and a second end opposite the first end, and a detent at the second end of the spring arm.

In one embodiment, each of the plurality of adapter banks may include a plurality of separate adapters bound together by the adapter bank band. Moreover, each of the plurality of separate adapters may include a first side with at least one first connector port and a second side with at least one second connector port. In an alternative embodiment, however, the adapter bank may include a monolithic body having the plurality of first and second connector ports on opposed sides thereof.

In another aspect of the disclosure, a method of connecting a first fiber optic cable and a second fiber optic cable at a distribution frame of a fiber optic network is disclosed. The distribution frame includes at least one host with a plurality of host ports configured to receive an adapter bank therein. Moreover, each of the first fiber optic cable and the second fiber optic cable includes an end terminated by a plurality of fiber optic connectors. The method includes inserting a bezel into at least one of the plurality of host ports in the at least one host of the distribution frame, the bezel having at least one bezel fastener and the bezel being releasably received in the at least one of the plurality of host ports by the at least one bezel fastener; inserting an adapter bank into an interior cavity of the bezel in a snap-fit connection to thereby connect the adapter bank to the at least one host; inserting the plurality of fiber optic connectors from the second fiber optic cable into respective connector ports on a second side of the adapter bank; and inserting the plurality of fiber optic connectors from the first fiber optic cable into respective connector ports on a first side of the adapter bank.

In one embodiment, the at least one host may include a first side and a second side, and inserting the bezel into the at least one of the plurality of host ports may include preventing the insertion of the bezel into the at least one of the plurality of host ports from the second side of the at least one host, and allowing the insertion of the bezel into the at least one of the plurality of host ports from the first side of the at least one host. Furthermore, in one embodiment, the bezel may include a first side and a second side, and inserting an adapter bank into the interior cavity of the bezel may include preventing the insertion of the adapter bank into the interior cavity from the first side of the bezel, and allowing the insertion of the adapter bank into the interior cavity from the second side of the bezel.

In one embodiment, the second fiber optic cable may include a connection interface including the adapter bank, wherein the plurality of fiber optic connectors from the second fiber optic cable are connected to respective connector ports on the second side of the adapter bank prior to the adapter bank being inserted into the interior cavity of the bezel in the snap-fit connection.

In one embodiment, the at least one host may include a first side and a second side, and the method may further include removing the bezel, the adapter bank, and the plurality of second connectors from the respective port of the at least one host from the first side of the at least one host as a unit assembly. The method may further include performing maintenance on one or more connectors and/or one or more connector ports of the adapter bank, and inserting the bezel, the adapter bank, and the plurality of second connector into the respective host port of the at least one host from the second side of the at least one host as a unit assembly.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic illustration of a data center campus according to an exemplary embodiment of the disclosure.
Fig. 2 is a partial perspective view of an exemplary data hall of the data center shown in Fig. 1.
Fig. 3 is a partial perspective view of a row of equipment racks of the exemplary data hall shown in Fig. 2, illustrating an intermediate distribution frame at the end of a row of equipment racks.
Fig. 4 is a perspective view of the intermediate distribution frame according to one embodiment of the disclosure.
Fig. 5 is a perspective view of a host for a distribution frame configured as a panel in one embodiment of the disclosure.
Fig. 6 is a perspective view of a bezel in accordance with an embodiment of the disclosure.
Fig. 7 is a top plan view of the bezel illustrated in Fig. 6.
Fig. 8 is a perspective view of an adapter bank in accordance with an embodiment of the disclosure.
Fig. 9 is a perspective view illustrating the insertion of the adapter bank into the bezel in a snap-fit connection.
Fig. 10 is an illustration of a fiber optic cable assembly in accordance with an embodiment of the disclosure having a connection interface which includes the adapter bank.
Fig. 11 is a perspective view illustrating connecting the connection interface of the fiber optic cable assembly to the bezel positioned in a port of the host.
Fig. 12 is a perspective view illustrating the removal of the bezel, adapter bank, and attached connectors from the port of the host as a unit assembly.

### Detailed Description

Various embodiments will be further clarified by examples in the description below. In general, the description relates to a distribution frame of a fiber optic network including a host having a plurality of ports configured to receive adapters, such as adapter banks, in a two-part connection. The two-part connection includes an intermediary connecting element, referred to herein as a bezel, configured to releasably connect to the ports on the host. The adapter banks are then configured to connect to the bezels in a snap-fit connection. Once the adapter banks are connected to the bezels, each bezel and connected adapter bank forms a unit assembly. The bezels are configured to be inserted into the ports of the host in a unidirectional manner, i.e., from the front side of the host. In a similar manner, the adapter banks are configured to be inserted into the bezels in a unidirectional manner. In this case, however, the adapter banks are configured to be inserted into the bezels from a rear side of the bezels, and from the rear side of the host when the bezels are pre-installed in the ports of the host.

Connecting the adapter banks to the ports of the host through a two-part connection, i.e., via the bezels, allows the adapter banks to form part of the fiber optic cable assembly being connected to the distribution frame instead of the adapter banks initially forming part of the distribution frame itself. In this regard, a connection interface of the fiber optic cable assembly includes one or more adapter banks and fiber optic connectors from the fiber optic cable being pre-installed in connector ports of the one or more adapter banks. By providing the adapter banks as part of the fiber optic cable, a large number of fiber optic connections may be made to the distribution frame by simply connecting the one or more adapter banks to the bezels in the host of the distribution frame via the snap-fit connection. Moreover, once the adapter banks are connected to the bezels in the host, should a technician need to access the connectors and/or connector ports on the rear side of host, for example, that access may be provided to the technician from the front side of the host. This is achieved, for example, by removing the bezel from the host via its releasable connection and pulling the unit assembly (i.e., the bezel, the adapter bank, and the connectors in the connector ports on the rear side of the adapter bank) from the port front the front side of the host. The technician may then conduct maintenance on the connectors and/or connector ports (e.g., remove debris) and reinsert the unit assembly back into its port in the host. These and other beneficial features of aspects of the disclosure will now be described in more detail.

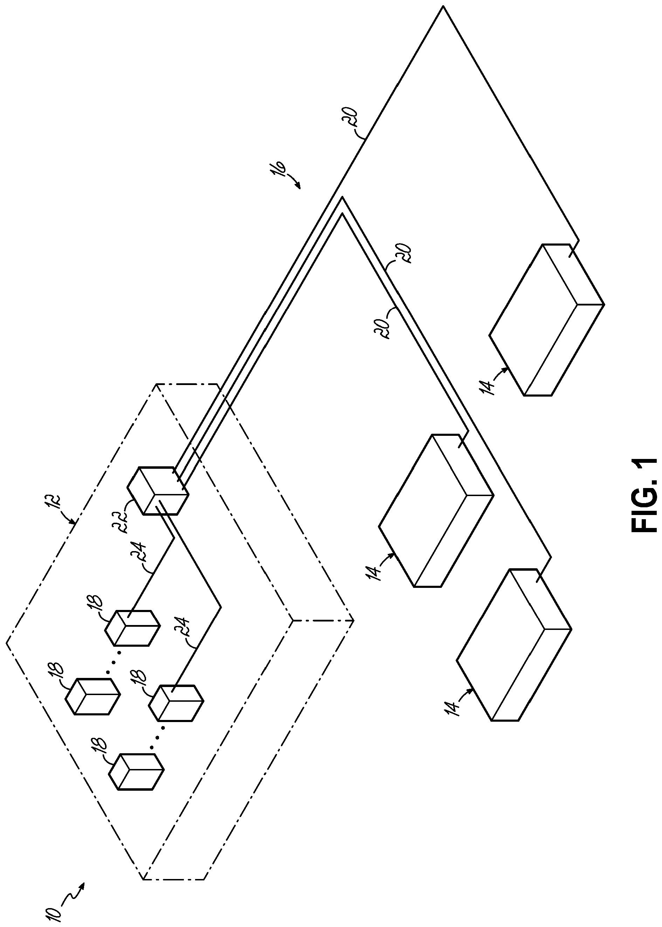

Referring now to the figures, Fig. 1 illustrates a modern-day data center 10 which may include a collection of buildings (referred to as a data center campus) having, for example, a main building 12 and one or more auxiliary buildings 14 in close proximity to the main building 12. While three auxiliary buildings 14 are shown, there may be more or less depending on the size of the campus. The data center 10 provides for a local fiber optic network 16 that interconnects the auxiliary buildings 14 with the main building 12. The local fiber optic network 16 allows network equipment 18 in the main building 12 to communicate with various network equipment (not shown) in the auxiliary buildings 14. In the exemplary embodiment shown, the local fiber optic network 16 includes trunk cables 20 extending between the main building 12 and each of the auxiliary buildings 14. Conventional trunk cables 20 generally include a high fiber-count arrangement of optical fibers for passing data and other information through the local fiber optic network 16. In the example illustrated in Fig. 1, the trunk cables 20 from the auxiliary buildings 14 are routed to one or more distribution cabinets 22 housed in the main building 12 (e.g., one shown).

Within the main building 12, a plurality of indoor fiber optic cables 24 ("indoor cables 24") are routed between the network equipment 18 and the one or more distribution cabinets 22. The indoor cables 24 generally include a high fiber-count arrangement of optical fibers for passing data and other information from the distribution cabinets 22 to the network equipment 18. Although only the interior of the main building 12 is schematically shown in Fig. 1 and discussed above, each of the auxiliary buildings 14 may house similar equipment for similar purposes. Thus, although not shown, each of the trunk cables 20 may be routed to one or more distribution cabinets 22 in one of the auxiliary buildings 14 in a manner similar to that described above. Furthermore, each of the auxiliary buildings 14 may include indoor cables 24 that extend between network equipment 18 and the one or more distribution cabinets 22 of the auxiliary building 14.

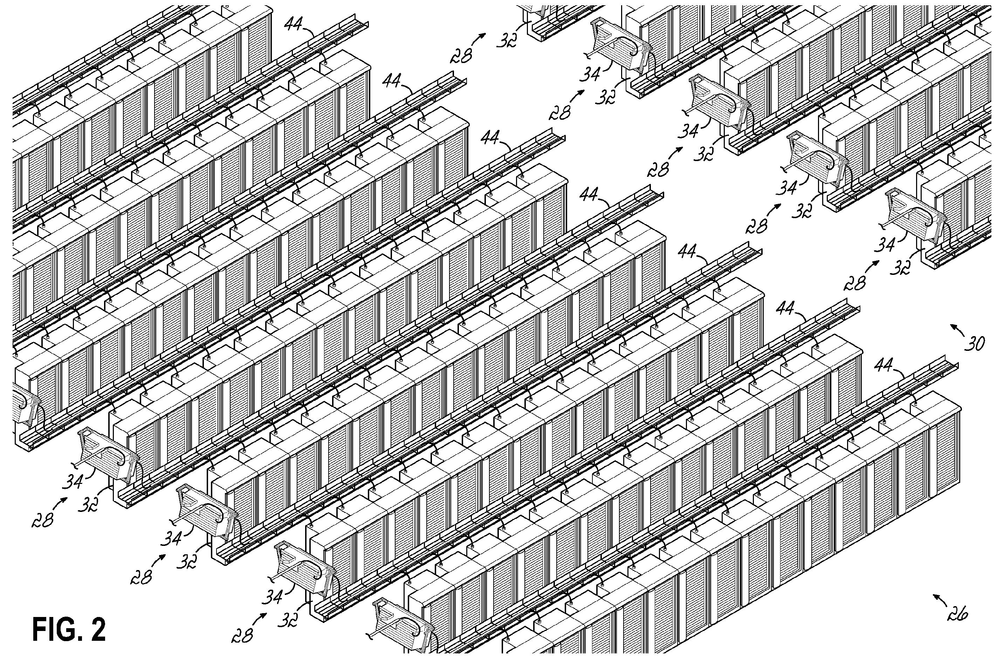

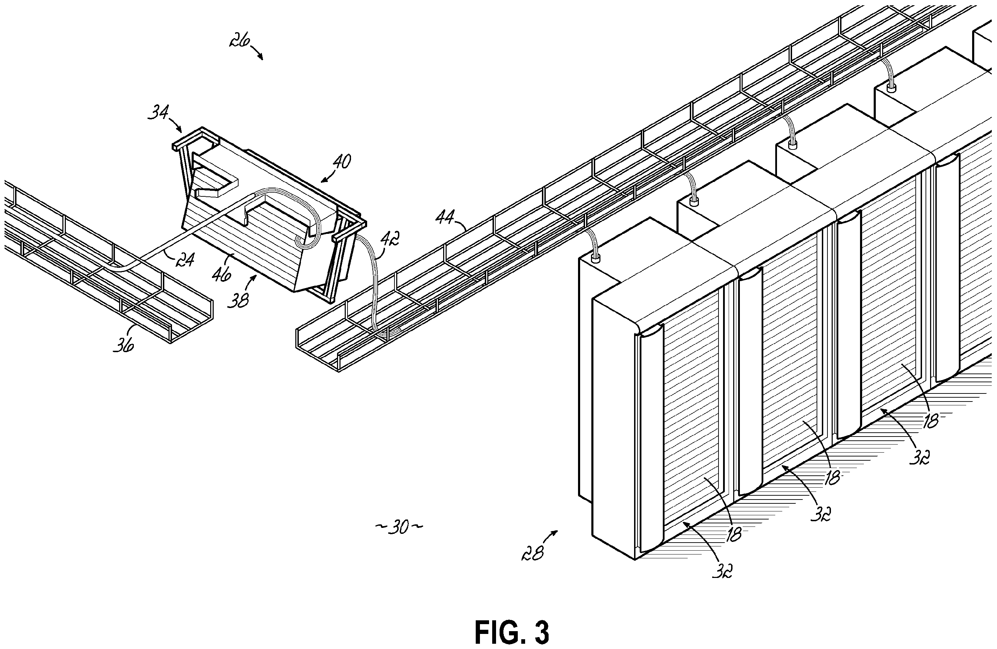

As illustrated in more detail in Figs. 2 and 3, the network equipment 18 in the main building 12 (or an auxiliary building 14) may be arranged in one or more data halls 26 that generally include a plurality of spaced-apart rows 28 on one or both sides of an access pathway 30. The arrangement of the data halls 26 into rows 28 helps organize the large number of equipment, fiber optic cables, fiber optic connections, etc. Each of the rows 28 includes a plurality of racks or cabinets 32 (referred to hereafter as "racks 32") generally arranged one next to the other along the row 28. Each of the racks 32 are vertically arranged frames for holding various network equipment 18 of the data center 10, as is generally known in the fiber optics industry.

With continued reference to Figs. 2 and 3, each row 28 may include an intermediate distribution frame 34 at the front or head end of the row 28 closest to the access pathway 30. The intermediate distribution frame 34 is a termination point of at least some of the optical fibers carried by one or more of the indoor cables 24. The one or more indoor cables 24 may be carried to the intermediate distribution frame 34 via an appropriately sized cable tray, basket rack, or ladder rack 36, as shown in Fig. 3. The intermediate distribution frame 34 includes a rear side 38 that defines a connection interface of the intermediate distribution frame 34 where the optical fibers carried by the one or more indoor cables 24 may be connected. The intermediate distribution frame 34 further includes an opposite front side 40 that defines a connection interface of the intermediate distribution frame 34 where the optical fibers carried by one or more row distribution cables 42 may be connected.

The row distribution cables 42 are routed between the intermediate distribution frame 34 and the network equipment 18 in the racks 32 of the row 28. The one or more row distribution cables 42 may be carried from the intermediate distribution frame 34 to each rack 32 via an appropriately sized cable tray 44, as shown. As will be described in further detail below, the intermediate distribution frame 34 provides an interface where one or more high fiber optic connection density hosts 46 may be located to facilitate the optical connections between one or more of the indoor cables 24 and one or more of the row distribution cables 42 such that, in use, signals from the one or more indoor cables 24 are transmitted to the one or more row distribution cables 42, and thus the associated network equipment 18 in the racks 32, and vice versa.

Although the intermediate distribution frame 34 is shown as being positioned above the row 28 (and thus above the ground), in other embodiments, the intermediate distribution frame 34 may be located elsewhere, such as at the head end of the row 28 or at a location along the row 28, such as in the middle of the row, for example. Furthermore, aspects of the present disclosure may be used with fiber optic distribution frames in a fiber optic network other than an intermediate distribution frame 34 in a data center environment. By way of example and without limitation, aspects of the disclosure may be applied to distribution frames associated with the distribution cabinets 22 of a data center 10, and at the central office or other distribution cabinets associated with FTTx networks (e.g., curbside cabinets, office building network cabinets, etc.). Thus, while aspects of the disclosure will be described in the context of an intermediate distribution frame 34 in the data center 10, aspects of the disclosure should not be limited to data center environments. Instead, aspects of the disclosure may be found advantageous at various distribution frames of a fiber optic network where a large number of fiber optic connections are being made.

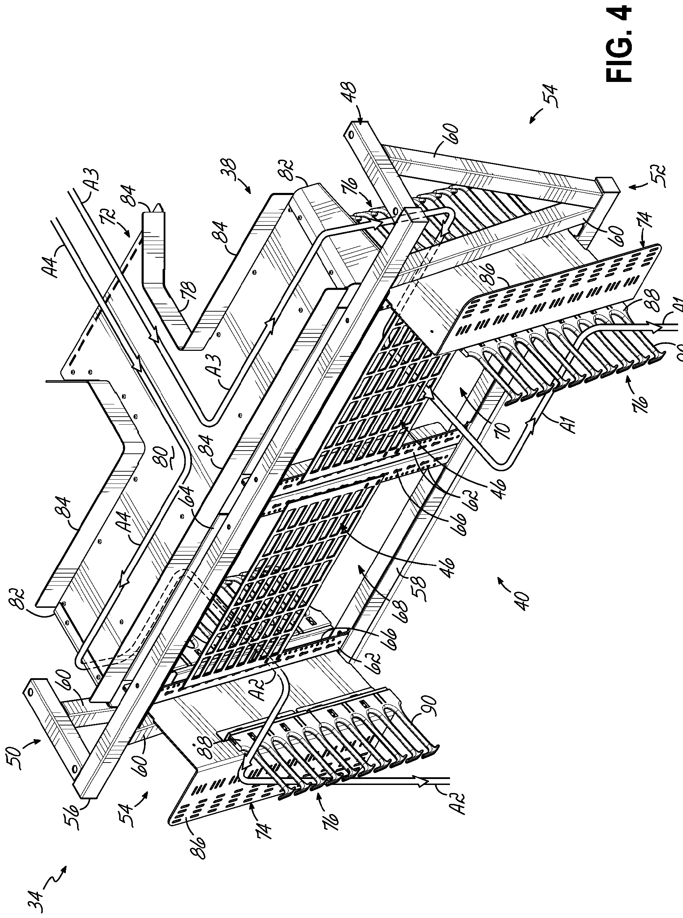

Fig. 4 is a perspective view an exemplary intermediate distribution frame 34 in accordance with one embodiment of the disclosure. The intermediate distribution frame 34 includes a support frame 48 that generally defines a top 50, a base 52, opposite sides 54, the front side 40 and the rear side 38 of the intermediate distribution frame 34. The terms "front", "rear", "top", "side", and "bottom" or "base" are for purposes of description and should not limit the intermediate distribution frame 34 to any particular configuration or orientation. The support frame 48 may be formed of a plurality of tubular frame members, which include at least an upper support member 56 secured to a lower support member 58 by a plurality of cross-support members 60. In one embodiment, the support frame 48 may be configured so that the front side 40 (or front face) of the intermediate distribution frame 34 is angled from vertical so as to be downward facing (i.e., facing downward toward the row 28 of racks 32, as shown in Fig. 3). Furthermore, the support frame 48 may include a plurality of vertically oriented support rails 62, at least one lower support bracket (not shown), and at least one upper support bracket 64. The upper support bracket 64 is mounted to and extends along the upper support member 56 of the support frame 48. The lower support bracket is similarly mounted to and extends along the lower support member 58 of the support frame 48.

The support rails 62 are attached to and extend between the upper support member 56 and the lower support member 58. In particular, the support rails 62 are attached to the upper support bracket 64 and the lower support bracket so as to extend between the upper support member 56 and the lower support member 58 to define an operating height of the intermediate distribution frame 34. The operating height of the intermediate distribution frame 34 may be defined in terms of a rack unit, or U, which indicates the vertical space within the intermediate distribution frame 34. A standard rack unit U is a vertical space that measures approximately 1.75 inches (44.45 millimeters) in height. The intermediate distribution frame 34 may have a capacity of 12U, for example. Other operating heights, however, are also possible. The upper support bracket 64 includes a plurality of tabs configured to receive a first end of each support rail 62 for attachment thereto and the lower support bracket similarly includes a plurality of tabs configured to receive a second end of each support rail 62 for attachment thereto. The end of each support rail 62 may be secured to respective tabs with appropriate fasteners, such as bolts or the like. As also shown in Fig. 4, each support rail 62 may include a plurality of keyholes and/or apertures 66 distributed along a length of the support rail 62 in, for example, a parallel manner. The plurality of keyholes and/or apertures 66 are for securing components to the intermediate distribution frame 34, such as one or more hosts 46, as will be described in further detail below.

In one embodiment, the intermediate distribution frame 34 may include four support rails 62. For example, a pair of support rails 62 may be centrally arranged along the upper support bracket 64 and the lower support member of the support frame 48 to generally divide an opening through the support frame 48 in half. In that regard, the central pair of support rails 62 each cooperate with a corresponding support rail 62 mounted on the support frame 48 adjacent to opposed sides 54 of the support frame 48 to define respective first and second interface openings 68, 70. Each interface opening 68, 70 may have an operating height of 12U, for example. Additionally, the support rails 62 may be, e.g., horizontally spaced apart along the upper and lower support members 56, 58 so that the first and second interface openings 68, 70 are sized for 19-inch rack spacing, for example. The keyholes 66 in the support rails 62 may be spaced per EIA-310 specifications to allow for rack unit spacing such as 1U, for example. The interface openings 68, 70 may each be sized to receive one or more hosts 46 where optical connections between the one or more row distribution cables 42 and the one or more indoor cables 24 may be made. More particularly, the apertures 76 provide the intermediate distribution frame 34 with a modular configuration that allows for hosts 46 to be flexibly adapted to the intermediate distribution frame 34.

For cable management, the intermediate distribution frame 34 may further include a cable trough 72, a pair of strain relief flanges 74, and one or more cable organizers 76. The cable trough 72 is configured to support and manage the one or more indoor cables 24 received by the intermediate distribution frame 34. In one embodiment, as shown in Fig. 4, the cable trough 72 may be attached to the upper support bracket 64 and located at the top 50 of the intermediate distribution frame 34. This elevated placement of the cable trough 72 allows the cable trough 72 to accommodate the indoor cables 24 that are coming from the ladder rack 36, as shown in Fig. 3. In that regard, the cable trough 72 is configured to receive the one or more indoor cables 24 from the ladder rack 36 and direct the one or more indoor cables 24 in an organized manner for connection at the rear side 38 of the intermediate distribution frame 34 (e.g., see Fig. 3). This elevated placement of the cable trough 72 for entry at the top 50 of the intermediate distribution frame 34 allows an installer unobstructed access to the rear side 38 of the intermediate distribution frame 34 for installation and maintenance activities. In alternative embodiments, the cable trough 72 may be located other than at the top 50 of the intermediate distribution frame 34.

In one embodiment, the cable trough 72 may be generally "T" shaped and includes a generally plate-like body having a mouth portion 78 that defines an infeed opening to the cable trough 72 that is configured to receive cables 24 into the cable trough 72. The cable trough 72 further includes a distribution raceway 80 that extends transverse to the mouth portion 78 to outfeed openings located at each of the opposing sides 54 of the support frame 48. The infeed opening may be flared to facilitate entry of the one or more indoor cables 24 into the cable trough 72, for example. The outfeed openings each include a guide plate 82 configured to facilitate the flow and routing of cables out from each outfeed opening of the cable trough 72 in a downward direction toward each host 46 supported by the intermediate distribution frame 34. For example, one or more indoor cables 24 may be routed from the ladder rack 36 and into the cable trough 72 via the infeed opening. Once in the cable trough 72, the cables 24 may be generally positioned with a bend after being routed from the mouth portion and along the distribution raceway 80 to either outfeed opening. For example, the flow of indoor cables 24 can be split or divided into two separate bundles, or groups of bundles, leading to the outfeed openings. This means that the indoor cables 24 can be effectively separated into two groups, each of which can be directed towards a different side 54 of the intermediate distribution frame 34.

As shown in Fig. 4, the cable trough 72 may further include sidewalls 84 that define a depth of the cable trough 72. In that regard, the sidewalls 84 serve to contain the one or more indoor cables 24 in the cable trough 72. As mentioned above, the cable trough 72 may be located at the top 50 of the intermediate distribution frame 34 and may be elevated above the intermediate distribution frame 34 to align the mouth of the cable trough 72 with the ladder rack 36 (e.g., see Fig. 3) to accept the one or more of the indoor cables 24 from the ladder rack 36. As the intermediate distribution frame 34 is suspended above the floor, it typically must be accessed from the floor below via a scissor lift, man lift or ladder, for example.

As noted above, the intermediate distribution frame 34 may include strain relief flanges 74 which are configured to support cabling from the front side 40 of the intermediate distribution frame 34, such as from one or more row distribution cables 42 that are terminated at the one or more hosts 46 located in one of the interface openings 68, 70. As shown in Fig. 4, one strain relief flange 74 may be located at each side 54 of the support frame 48 of the intermediate distribution frame 34. More particularly, each strain relief flange 74 may be attached to a respective support rail 62 that is adjacent to the opposed sides 54 of the support frame 48. Each strain relief flange 74 may be attached to a respective support rail 62 so as to extend a distance from the support frame 48 on the front side 40 of the intermediate distribution frame 34.

In one embodiment, each strain relief flange 74 may be generally L-shaped having a first leg and a second leg. The first leg may be configured to be attached to a corresponding outermost support rail 62, as shown in Fig. 4, and the second leg may be attached to the first leg such that the second leg is spaced from the support frame 48 by the first leg. The second leg may extend from the first leg outwardly and toward a respective side 54 of the intermediate distribution frame 34. The second leg of each strain relief flange 74 may include a plurality of apertures 86 which may be used to secure one or more row distribution cables 42, or bundles of row distribution cables 42, to the strain relief flange 74.

As mentioned above, the intermediate distribution frame 34 may also include one or more cable organizers 76. As shown in Fig. 4, each cable organizer 76 includes a body 88 with a plurality of fingers 90 that extend from the body 88 to a terminal end having a stop or hook. The fingers 90 may be spaced apart along a length of the body 88 to define a gap or space between adjacent fingers 90. In the exemplary embodiment shown, the intermediate distribution frame 34 includes several cable organizers 76, on both the front side 40 and the rear side 38 of the intermediate distribution frame 34. The cable organizers 76 may be similarly sized and have the same finger count, such as five, for example. Alternatively, the cable organizers 76 may be different in size and have a different finger count, and the configuration of the cable organizers 76 may be varied to accommodate the specific application.

The front side 40 of the intermediate distribution frame 34 may include two sets of cable organizers 76, with one set of cable organizers 76 being mounted to each strain relief flange 74. In that regard, the body 88 of each cable organizer 76 may be attached to the first leg of the strain relief flange 74 with a bracket. The set of cable organizers 76 may be mounted to the strain relief flange 74 in a vertical arrangement, one on top of the other, to provide each strain relief flange 74 with a total of ten support fingers 90. In use, fibers associated with the one or more row distribution cables 42 may be furcated into bundles and routed from the host 46, to either side 54 of the intermediate distribution frame 34, as illustrated schematically in Fig. 4 by directional arrows A1 and A2. Each bundle of the row distribution cables 42 may be secured to a respective strain relief flange 74 with a Velcro^{®} wrap or other suitable fastener, such as a zip tie, for example, using the apertures 86. For example, the strain relief flanges 74 may support a majority of the weight of each bundle of row distribution cables 42. The fingers 90 of each cable organizer 76 may also used to support and assist in organization of the bundles of row distribution cables 42. In that regard, the fingers 90 may provide additional support for each bundle of the row distribution cables 42 as the cables routed from the interface opening 68, 70, over the fingers 90, to the strain relief flanges 74 and eventually to the cable tray 44.

With further reference to Fig. 4, the rear side 38 of the intermediate distribution frame 34 may also include two sets of cable organizers 76. Similar to the front side 40 of the intermediate distribution frame 34, each set of cable organizers 76 may be attached to the outermost support rail 62 and be mounted to a respective support rail 62 in a vertical arrangement, one on top of the other, to provide each outermost support rail 62 with ten support fingers 90. In use, the one or more indoor cables 24 may be furcated into bundles and routed from the cable trough 72 to the opposed sides 54 of the intermediate distribution frame 34. The cables 24 are then routed through fingers 90 of each set of cable organizers 76, as illustrated schematically in Fig. 4 by directional arrows A3 and A4. As shown, the bundles of the one or more indoor cables 24 may be configured to be routed from the cable trough 72 and into a space between each outfeed opening of the cable trough 72 and the upper support member 56 of the support frame 48. The one or more indoor cables 24 are generally gravity fed from the cable trough 72 to each set of cable organizers 76. To this end, the fingers 90 provide additional support for each bundle of indoor cables 24 as the cables are routed from the cable trough 72 to a respective interface opening 68, 70 for making the appropriate optical connection at a respective host 46 located therein, as will be described in further detail below.

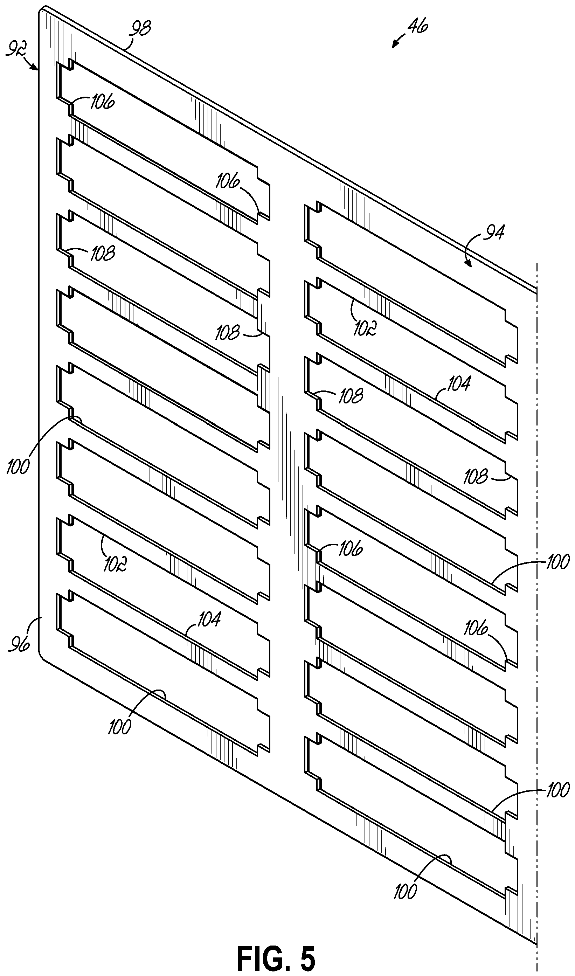

As briefly described above, the intermediate distribution frame 34 may include one or more hosts 46 that facilitate the optical connection between the one or more indoor cables 24 and the one or more row distribution cables 42 such that, in use, signals from the one or more indoor cables 24 are transmitted to the one or more row distribution cables 42 and the associated network equipment 18 in the racks 32, and vice versa. In an exemplary embodiment, and as illustrated in Figs. 4 and 5, each host 46 may include a panel 92 that is connectable to the support frame 48 of the intermediate distribution frame 34. More particularly, the panel 92 may be configured to be attached to the support frame 48 at the first or second interface opening 68, 70 so as to at least partially cover the first or second interface opening 68, 70. In one embodiment, only one panel 92 may be attached to the support frame 48 at the first and/or second interface opening 68, 70, and the panel 92 may only cover a portion of the first and/or second interface opening 68, 70. However, in an alternative embodiment, the panel 92 may cover the entire opening 68, 70, or two panels 92 may be attached to the support frame 48 at each of the first and/or second interface opening 68, 70. To this end, the intermediate distribution frame 34 may include one, two, or more panels 92 attached to the support frame 48 at one or both of the interface openings 68, 70. More particularly, each panel 92 may be configured to be attached to a pair of support rails 62 that define the respective first or second interface opening 68, 70. In one embodiment, the at least one panel 92 may include apertures that are configured to align with apertures formed in a corresponding support rail 62. In that regard, fasteners, such as screws or bolts, may be positioned through the aligned apertures to secure the at least one panel 92 to respective support rails 62 of the intermediate distribution frame 34. While the host 46 is described as a panel 92, it should be appreciated that the host 46 may have other configurations and remain within the scope of the present disclosure.

As illustrated in Fig. 5, in an exemplary embodiment, the at least one panel 92 may include a generally flat, plate-like panel body 94, having a front side 96 and an opposite rear side 98. For example, the front side 96 may be facing outwardly on the front side 40 of the intermediate distribution frame 34 and the rear side 98 may be facing outwardly on the rear side 38 of the intermediate distribution frame 34. The at least one panel 92 may further include a plurality of host slots or ports 100 (also referred to as "ports 100") formed in the panel body 94. As will be described in more detail below, the ports 100 in the at least one panel 92 are configured to receive adapter banks which are, in turn, configured to receive fiber optic connectors that terminate the one or more indoor cables 24 and the one or more row distribution cables 42 that are connected to each other at the at least one panel 92 of the intermediate distribution frame 34.

In one embodiment, each of the ports 100 may be generally rectangular in shape and be defined by a top edge 102, a bottom edge 104, and opposed side edges 106 of the at least one panel 92. Additionally, the opposed side edges 106 of the at least one panel 92 that partially define the ports 100 may include generally rectangular-shaped cutouts 108 for purposes that will be described below. As illustrated in Figs. 4 and 5, in one embodiment, the ports 100 may be arranged in a generally rectangular array including a plurality of horizontally arranged rows and vertically arranged columns. The number of rows and columns of ports 100 in the at least one panel 92 may depend on the size of the panels 92 and/or the particular application of the distribution frame (e.g., data center, central office, curbside cabinet, etc.). Thus, the at least one panel 92 should not be limited to any particular number or arrangement of ports 100.

As noted above, conventional distribution frames are typically configured to have adapter banks directly coupled to the ports in the host of the distribution frame. However, in an aspect of the present disclosure, the adapter banks are no longer directly connected to the host(s) of the distribution frame but are instead coupled to the host(s) through an intermediate connection element. In other words, in an aspect of the disclosure, the adapter banks are coupled to the host(s) in a two-part connection, i.e., the adapter banks are connected to the intermediate connection elements, and the intermediate connection elements are coupled to the host(s). Thus, the adapter banks do not make a direct connection to the host(s) but are connected to the host(s) through the intermediate connection elements. As will be described in greater detail below, using an intermediate connection element provides a number of benefits over existing designs that facilitate installation and reduces labor and time associated with connecting fiber optic cables at a distribution frame of a fiber optic network.

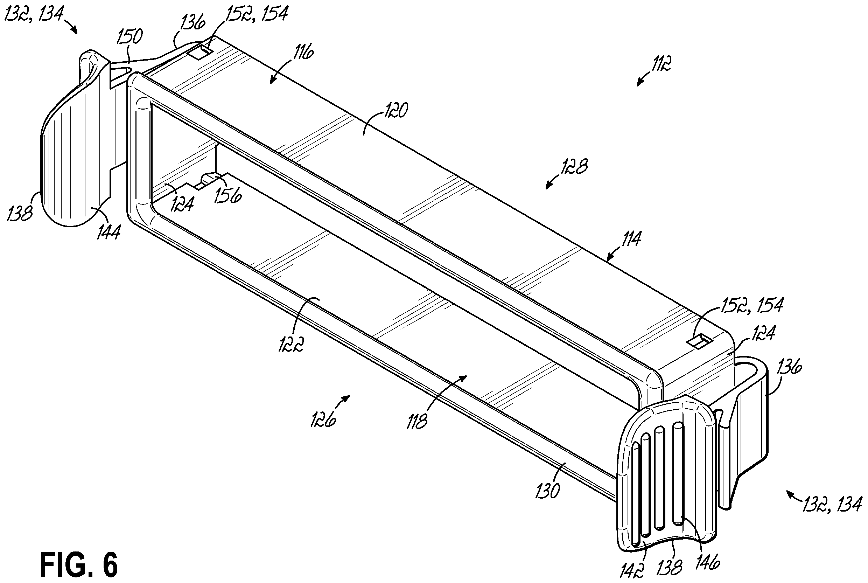

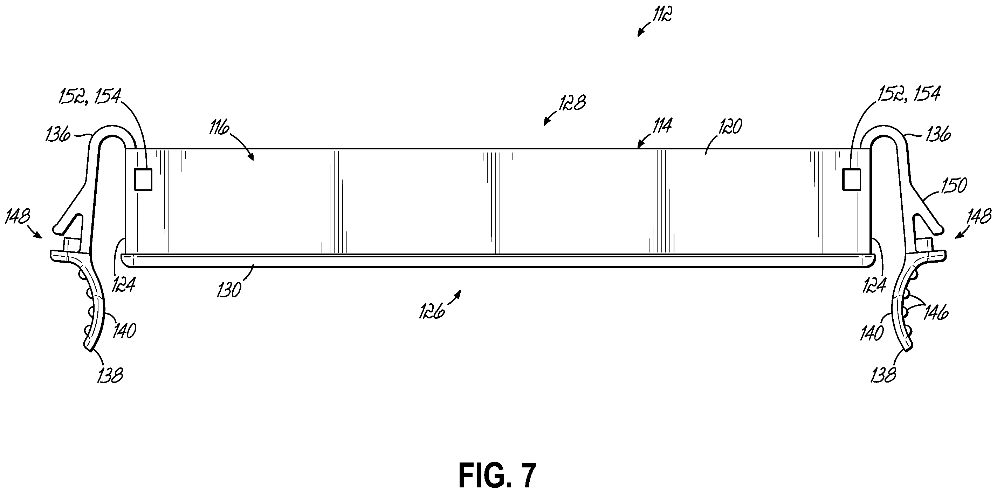

Figs. 6 and 7 illustrate an intermediate connection element 112 (referred to hereafter as "bezel 112") in accordance with an embodiment of the disclosure. As mentioned above, each of the plurality of bezels 112 are configured to be received in a respective one of the plurality of ports 100 in the at least one panel 92 and are further configured to receive a respective one of a plurality of adapter banks connected to the at least one panel 92. In one embodiment, each of the plurality of bezels 112 includes a generally rectangular bezel body 114 including a peripheral wall 116 and an interior cavity 118 defined by the peripheral wall 116. The peripheral wall 116 includes a top wall 120, a bottom wall 122, and a pair of side walls 124 extending between the top wall 120 and the bottom wall 122. The shape of the peripheral wall 116 is configured to generally match the shape of the ports 100 in the at least one panel 92 and the size of bezel body 114 is configured to be just slightly smaller than the ports 100 in the at least one panel 92. Thus, for example, when the bezel 112 is received in a respective one of the plurality of ports 100, the top wall 120 is configured to confront and/or engage the top edge 102 of the port 100; the bottom wall 122 is configured to confront and/or engage the bottom edge 104 of the port 100; and the side walls 124 are configured to confront and/or engage respective side edges 106 of the port 100.

The bezel 112 includes a front side 126 and a rear side 128 generally corresponding to the front side 96 and the rear side 98 of the at least one panel 92 when connected thereto. In one embodiment, the edge of the bezel body 114 adjacent the front side 126 includes an outwardly extending flange 130 along at least a portion of the peripheral wall 116. In one embodiment, for example, the flange 130 may extend outwardly from the top wall 120 and bottom wall 122 adjacent the front side 126 of the bezel body 114. In an alternative embodiment, however, the flange 130 may extend outwardly from each of the walls 120, 122, 124 that make up the peripheral wall 116 of the bezel body 114. As will be explained in more detail, the flange 130 of the bezel 112 provides unidirectional insertion of the bezel 112 into a respective one of the plurality of ports 100 in the at least one panel 92. More particularly, the flange 130 is sized to allow the bezel 112 to be inserted into a respective port 100 by orienting the bezel 112 so that the rear side 128 of the bezel 112 faces toward the front side 96 of the at least one panel 92 and pushing the bezel 112 into and through the port 100 until the flange 130 abuts or nearly abuts the front side 96 of the at least one panel 92. The flange 130 is configured to prevent the bezel 112 from passing completely through the port 100 in the at least one panel 92 from the front side 96 to the rear side 98 of the at least one panel 92. Additionally, the flange 130 is sized to prevent the bezel 112 from being inserted into the port 100 from the rear side 98 of the at least one panel 92. Thus, in the described embodiment, the bezels 112 may be inserted into respective ports 100 in the at least one panel 92 only from the front side 96 of the at least one panel 92.

In one embodiment, the interior cavity 118 of the bezel 112 may be defined by the peripheral wall 116 and generally matches the shape of the adapter bank which it is configured to receive, and the size of interior cavity 118 is configured to be just slightly larger than the adapter bank which it is configured to receive. Thus, in one embodiment, the interior cavity 118 may be generally rectangular in shape and is configured to receive an adapter bank in a snap-fit manner, as will be described in more detail below.

In an exemplary embodiment according to the disclosure, each of the plurality of bezels 112 is configured to be removably connected to its respective port 100 in the at least one panel 92. In other words, each of the plurality of bezels 112 is configured to be selectively connectable to and releasable from its respective port 100 in the at least one panel 92 in an easy manner and may be so connected to and released from its respective port 100 repeatedly. In this regard, each of the plurality of bezels 112 may include at least one bezel fastener 132 for achieving the removable connection of the bezel 112 to its respective port 100 in the at least one panel 92. In a preferred embodiment, the bezel 112 may include a plurality of bezel fasteners 132, such as a pair of bezel fasteners 132. By way of example, in one embodiment, each of the plurality of bezels 112 may include a bezel fastener 132 associated with each of the side walls 124 of the bezel body 114 to achieve the removable connection of the bezel 112 to its respective port 100. In one embodiment, the at least one bezel fastener 132 is configured to allow the bezel 112 to be selectively connected to and released from the port 100 easily and without using tools, for example. Thus, the insertion and removal of the bezels 112 into/from their respective ports 100 may be manually achieved by a technician in an easy, straightforward manner.

As illustrated in Figs. 6 and 7, in one embodiment, the at least one bezel fastener 132 may include a manually actuated bezel clip 134. The bezel clip 134 is configured to be movable between a first release position and a second retained position. In the release position, the bezel 112 is configured to be releasable from its respective port 100 in the at least one panel 92, and in the retained position, the bezel 112 is configured to be retained in its respective port 100 in the at least one panel 92. In one embodiment, the bezel clip 134 may include a spring arm 136 having a first end and a second end. The first end of the spring arm 136 may be connected to the bezel body 114 so that the spring arm 136 extends outboard of the bezel body 114. More particularly, in one embodiment, a bezel clip 134 may be provided at each of the side walls 124 of the bezel body 114 and the first end of each of the spring arms 136 may be connected to a respective side wall 124. For example, and without limitation, in an exemplary embodiment, the first end of the spring arms 136 may be connected to the rear side 128 of their respective side wall 124 so that the second end of the spring arms 136 extends outboard of the side wall 124 and toward the front side 126 of the bezel 112. The spring arms 136 are movable toward and away from their respective side walls 124. In this regard, when the spring arms 136 are positioned toward their respective side walls 124 (e.g., closer to their respective side walls 124), the bezel clips 134 may be in their release position, and when the spring arms 136 are positioned away from their respective side walls 124 (e.g., further from their respective side walls 124), the bezel clips 134 may be in their retained position. In one embodiment, the spring arms 136 may be biased toward their retained position and moveable toward their release position by the application of a squeezing force by a technician, for example.

In this regard, in one embodiment, the second end of the spring arms 136 may include a finger tab 138 for moving the bezel clips 134 between the retained position and the release position, for example. In this regard, the finger tab 138 may include a generally arcuate or concave body 140 having an outer surface 142 and an inner surface 144. The finger tab 138 may be attached to the second end of the spring arm 136 on the inner surface 144 of the finger tab 138 such that the outer surface 142 faces outwardly and is configured to receive a thumb or finger from a technician or the like for manually moving the bezel clip 134 from the retained position toward the release position. In this regard, the outer surface 142 of the finger tabs 138 may include grip-enhancing features 146 (e.g., bumps, ridges, etc.) to facilitate the manual engagement from the technician.

The bezel clips 134 also include pockets 148 for engaging an edge of the at least one panel 92 that defines the ports 100 to thereby retain the bezels 112 in their respective ports 100. For example, in one embodiment, the spring arms 136 may include a strut 150 adjacent their second ends that, in combination with the finger tabs 138, define the pockets 148 that receive the side edges 106 of the ports 100. When the bezel 112 is in the retained position within a respective port 100, the bezel clips 134 are positioned in the cutouts 108 so that the side edges 106 of the ports 100 are seated within the pockets 148 and the bezel 112 is securely connected to and retained by the at least one panel 92. Moreover, when the bezel 112 is in the release position, the pockets 148 are moved away from the side edges 106 of the ports 100 such that the bezels 112 may be removed from their respective ports 100 without restriction from the bezel clips 134. In this regard, similar to the above, the bezels 112 are configured for unidirectional removal from their respective ports 100 in the at least one panel 92. As noted above, the flanges 130 prevents the bezels 112 from passing completely through the ports 100 in the at least one panel 92. Thus, to remove a bezel 112 from a port 100, the bezel 112 must first be placed in the release position and then moved away from the front side 96 of the at least one panel 92. Moreover, in the described embodiment, the bezels 112 may be removed from their respective ports 100 in the at least one panel 92 only from the front side 96 of the at least one panel 92.

As noted above, each of the plurality of bezels 112 includes an interior cavity 118 for receiving an adapter bank therein in a snap-fit manner. To this end, the peripheral wall 116 of each of the bezels 112 may include at least one adapter fastener interface 152 for engaging with an adapter fastener associated with the adapter bank in a snap-fit manner. In one embodiment, the at least one adapter fastener interface 152 may include at least one aperture 154 extending through the peripheral wall 116 of the bezel body 114 for receiving the adapter fastener associated with the adapter bank. By way of example, the at least one adapter fastener interface 152 may include a pair of apertures 154 in opposed walls that define the peripheral wall 116 of the bezel body 114. In the exemplary embodiment illustrated in Figs. 6 and 7, the at least one adapter fastener interface 152 may include a first pair of apertures 154 in the top wall 120 and bottom wall 122 of the bezel body 114 and a second pair of apertures 154 in the top wall 120 and the bottom wall 122 of the bezel body 114. The first pair of apertures 154 may be adjacent one side wall 124 of the bezel body 114 and the second pair of apertures 154 may be adjacent the opposed side wall 124 of the bezel body 114. Moreover, in the exemplary embodiment, the first and second pair of apertures 154 may be adjacent the rear side 128 of the bezel 112.

While the apertures 154 are illustrated as being in the top and bottom walls 120, 122 of the bezel body 114, it should be appreciated that the apertures 154 may be located in other walls of the peripheral wall 116, whether opposed walls or not, in alternative embodiments. Additionally, while the apertures 154 have been described as being in pairs, aspects of the disclosure should not be limited to such an arrangement as a wide range of configurations and numbers of apertures 154 may be used to achieve a snap-fit connection between the bezels 112 and the adapter banks that are received in the interior cavities 118 thereof. As illustrated in Fig. 6, to facilitate a snap-fit connection, each of the apertures 154 may include a cam surface or ramp 156 extending from the rear side 128 of the bezel 112 to the aperture 154 on the inner surfaces of the opposed walls 120, 122. As explained in more detail below, the ramp 156 engages with the adapter fastener associated with the adapter bank to compress a spring member such that when the spring member clears the ramp, the adapter fastener snaps into place within the apertures 154.

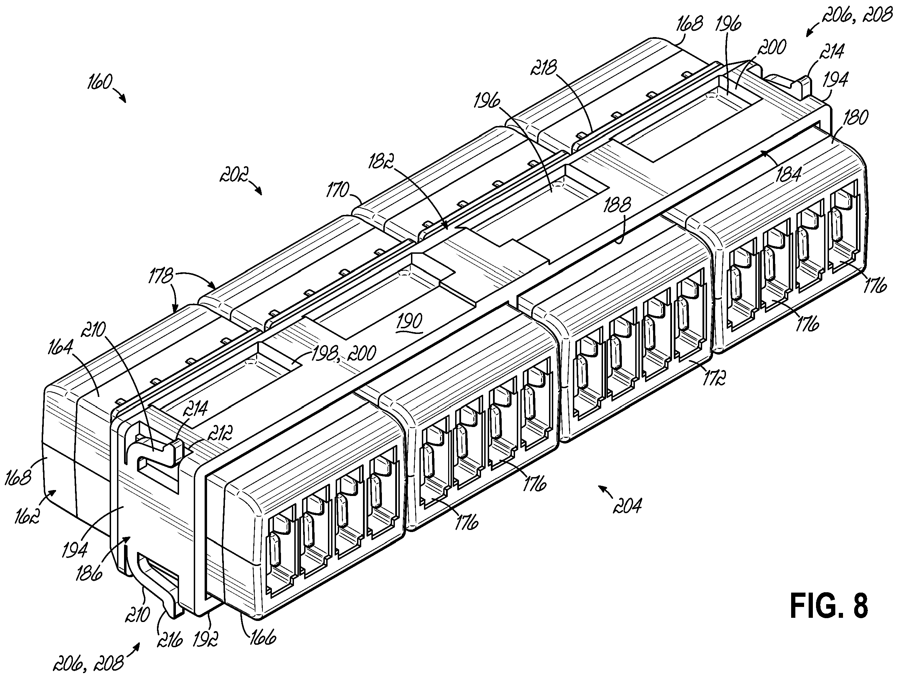

Fig. 8 illustrates an adapter bank 160 configured to be received in the interior cavity 118 of a bezel 112 in accordance with an embodiment of the disclosure. As is readily understood in the fiber optics industry, the adapter bank 160 is configured to optically connect two fiber optic devices, such as two fiber optic cables at the adapter bank. More particularly, the adapter bank 160 is configured to precisely align optical fibers, e.g., carried by the fiber optic cables, so that an optical signal may be transmitted from one optical fiber to another optical fiber with minimal losses. To this end, the adapter bank 160 includes a generally rectangular adapter bank body 162 defining a top wall 164, a bottom wall 166, side walls 168 extending between the top wall 164 and the bottom wall 166, a front end wall 170, and a rear end wall 172, each of the end walls 170, 172 generally extend between the top wall 164 and bottom wall 166 and the opposed side walls 168. The front end wall 170 of the adapter bank body 162 includes a plurality of front connector ports 174 that are configured to receive fiber optic connectors associated with a first fiber optic cable (e.g., row distribution cables 42). In a similar manner, the rear end wall 172 of the adapter bank body 162 includes a plurality of rear connector ports 176 that are configured to receive fiber optic connectors associated with a second fiber optic cable (e.g., indoor cables).

In one embodiment, the adapter bank 160 may be formed from a plurality of separate adapters 178 (e.g., four shown) serially arranged one next to the other in a side-by-side configuration, for example. Each adapter 178 may include its own adapter housing 180 with its own front and rear connector ports 174, 176 (e.g., four connector ports 174, 176 are shown for each adapter 178), where the collective adapter housings 180 define the adapter bank body 162. It should be recognized that the number of adapters 178 that form the adapter bank 160 may be more or less than the four adapters 178 illustrated in the figures, and the number of front and rear connector ports 174, 176 of each adapter 178 may likewise be more or less than the four connector ports 174, 176 illustrated in the figures. Furthermore, in an alternative embodiment, instead of the adapter bank 160 being formed from a plurality of separate adapters 178, the adapter bank 160 may include a single monolithic adapter bank body 162 having, for example, the same number of front and rear connector ports 174, 176 as that shown in Fig. 8. Thus, aspects of the disclosure should not be limited to that specifically illustrated in the figures.

Depending on the application, the adapter bank 160 may be configured for a single fiber connector (simplex), dual fiber connector (duplex), or multifiber connector and can be configured to receive different types of optical connectors to realize the conversion between different interfaces such as SC, ST, LC, SN, MDC, MPO, SN-MT, and MMC. In an exemplary embodiment, the front and rear connector ports 174, 176 may be configured to receive MMC connectors from the first and second fiber optic cables, which are described in more detail below. Additionally, the front and/or rear connector ports 174, 176 may be configured as shuttered ports or as shutterless ports, which are both known in the industry. Moreover, although the front and rear connector ports 174, 176 are generally vertically arranged in the adapter bank 160, this is merely exemplary and it should be recognized that the front and rear connector ports 174, 176 may alternatively be generally horizontally arranged in the adapter bank 160.

As illustrated in Fig. 8, the adapter bank 160 may further include an adapter bank manifold or band 182 for holding and carrying the adapter bank body 162 (i.e., the adapter bank body 162 and the adapter bank band 182 form a unit assembly). In one embodiment, the adapter bank band 182 includes a generally rectangular band body 184 including a peripheral wall 186 and an interior cavity 188 defined by the peripheral wall 186. The peripheral wall 186 includes a top wall 190, a bottom wall 192, and a pair of side walls 194 extending between the top wall 190 and the bottom wall 192. The shape of the peripheral wall 186 is configured to generally match the shape of the adapter bank body 162, and the size of band body 184 is configured to be just slightly larger than the adapter bank body 162. Thus, for example, when the adapter bank body 162 is received in the interior cavity 188 of the band body 184, the top wall 190 is configured to confront and/or engage the top wall 164 of the adapter bank body 162; the bottom wall 192 is configured to confront and/or engage the bottom 166 of the adapter bank body 162; and the side walls 194 are configured to confront and/or engage respective side walls 168 of the adapter bank body 162.

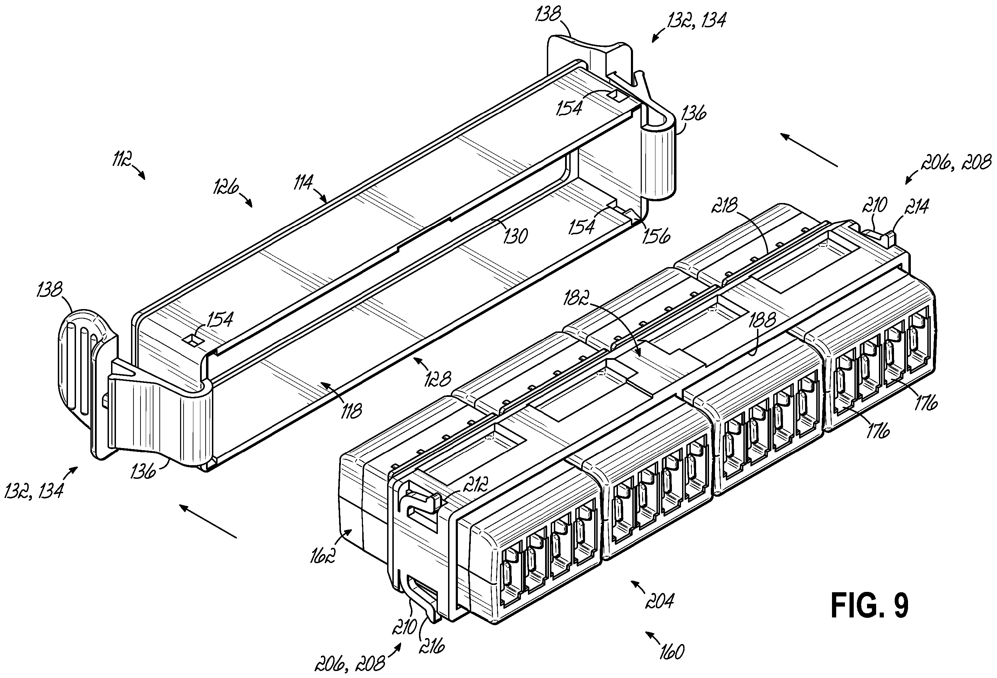

In one embodiment, and as illustrated in Figs. 8 and 9, the adapter bank body 162 may be configured to be connected to the adapter bank band 182 through a snap-fit connection. For example, the snap-fit connection may form a removable connection between the adapter bank body 162 and the adapter bank band 182. In an exemplary embodiment, the adapter bank body 162 may include one or more spring clips 196 and the adapter bank band 182 may include one or more clip receivers 198 for receiving the one or more spring clips 196 in a snap-fit connection. As illustrated in Fig. 8, in one embodiment, the one or more clip receivers 198 may include one or more slots 200 formed in the peripheral wall 186. By way of example, the one or more spring clips 196 may be on the top wall 164 and/or bottom wall 166 of the adapter bank body 162 and the one or more slots 200 may be formed in the top wall 190 and/or the bottom wall 192 of the band body 184. It should be recognized, however, that the arrangement of the one or more spring clips 196 and the one or more clip receivers 198 may have different configurations and remain within the scope of the present disclosure. When the adapter bank body 162 is received in the interior cavity 188 of the adapter bank band 182, the adapter bank 160 includes a front side 202 defined by the front connector ports 174 and a rear side 204 defined by the rear connector ports 176.

As noted above, the adapter bank 160 is configured to be received within the interior cavity 118 of a respective one of the plurality of bezels 112 in the at least one panel 92 in a snap-fit manner. In this regard, the adapter bank 160 includes at least one adapter fastener 206 that is configured to cooperate with the at least one adapter fastener interface 152 associated with the bezel 112 to achieve the snap-fit connection. As illustrated in Figs 8 and 9, the at least one adapter fastener 206 may include an adapter clip 208 that is configured to be moveable between an extended position and a retracted position. In the retracted position, the adapter bank 160 is configured to be disengaged from the bezel 112 and in the extended position, the adapter bank 160 is configured to be engaged with the bezel 112. In one embodiment, the adapter clip 208 may include a spring arm 210 having a first end and a second end. The first end of the spring arm 210 may be connected to the band body 184 so that the spring arm 210 extends outboard of the band body 184. More particularly, in one embodiment, a pair of adapter clips 208 may be provided at each of the side walls 194 of the band body 184 and the first end of each of the spring arms 210 may be connected to a respective side wall 194. For example, and without limitation, in an exemplary embodiment, the first end of the spring arms 210 may be connected to an edge of a notch 212 in respective side walls 194 so that the second end extends outboard of the top wall 190 and the bottom wall 192 of the adapter bank band 182. The spring arms 210 are movable toward and away from their respective top and bottom walls 190, 192. In this regard, when the spring arms 210 are positioned toward their respective top and bottom walls 190, 192 (e.g., closer to their respective walls 190, 192), the adapter clips 208 may be in their retracted position, and when the spring arms 210 are positioned away from their respective top and bottom walls 190, 192 (e.g., further from their respective walls 190, 192), the spring arms 210 may be in their extended position. In an exemplary embodiment, the spring arms 210 may be biased toward their extended positions and moved toward their retracted position by the engagement of the spring arms 210 with the bezel 112.

In one embodiment, the second end of the spring arms 210 may include a detent 214 for being received in a respective one of the adapter fastener interfaces 152 (e.g., apertures 154) on the bezels 112 when in the extended position. As illustrated in the figures, the detents 214 at the second end of the spring arms 210 may be generally pointed away from the top and bottom walls 190, 192 of the adapter bank band 182. As noted above, however, the spring arms 210 are capable of deflecting toward the retracted position under a deflection force. In this regard, the detent 214 of each of the spring arms 210 may include a cam surface of ramp 216 on the side of the detent 214 that faces the front side 202 of the adapter bank 160. As will be explained in more detail below, this facilitates the deflection of the spring arms 210 of the adapter clips 208 toward the retracted position when the adapter bank 160 is inserted into a respective one of the plurality of bezels 112 positioned in respective ports and in the at least one panel 92.

Fig. 9 illustrates an adapter bank 160 being inserted into the interior cavity 118 of a bezel 112 in accordance with an embodiment of the disclosure. Similar to the unidirectional insertion of the bezels 112 into respective ports 100 in the at least one panel 92, the adapter banks 160 are configured for unidirectional insertion into the interior cavity 118 of the bezels 112. More particularly, the adapter banks 160 are configured so as to be insertable into the bezels 112 only from the rear side 128 of the bezels 112. In this regard, the adapter bank body 162 may include a flange 218 extending outwardly from at least one of the walls of the adapter bank body 162. For example, in one embodiment, the flange 218 may extend from each of the top wall 164 and the bottom wall 166 of the adapter bank body 162. In an alternative embodiment, flanges 218 may also extend from the side walls 168 of the adapter bank body 162. The flange 218 is sized so that the adapter bank 160 is insertable into the interior cavity 118 of the bezel 112 from the rear side 128 of the bezel 112 but not the front side 126 of the bezel 112. In this regard, the flange 130 at the front side 126 of the bezel body 114 may extend inwardly and into the opening of the interior cavity 118 (Fig. 9). Thus, the flanges 218 and 130 on the adapter bank body 162 and the bezel body 114, respectively, cooperate to allow the adapter bank 160 to be inserted only through the rear side 128 of the bezel 112.

When the adapter bank 160 is inserted into the interior cavity 118 of the bezel 112 from the rear side 128, the adapter bank 160, including the front portion of the adapter bank band 182 are relatively tightly received in the interior cavity 118. As discussed above, the adapter fasteners 206 on the adapter bank band 182 generally align with the adapter fastener interfaces 152 on the bezel 112 to connect the adapter bank 160 to the bezel 112 in a snap-fit manner. More particularly, in an exemplary embodiment, the detents 214 of the adapter clips 208 on the adapter bank band 182 project outwardly of the adapter bank 160 and generally align with the apertures 154 in the bezel 112. As the adapter bank 160 is further inserted into the interior cavity 118, the ramps 216 of the detents 214 of the adapter clips 208 engage the bezels 112, and more particularly engage the ramps 156 associated with the apertures 154 to cause the spring arms 210 of the adapter clips 208 to deflect away from their extended positions toward their retracted positions.

With further insertion, the detents 214 of the adapter clips 208 clear the ramp 156 of the apertures 154 and the spring arms 210 "snap" back toward their extended positions under the bias of the spring arms 210 to firmly seat the detents 214 of the adapter clips 208 on the adapter bank 160 in their respective apertures 154 in the bezels 112. This snap-fit connection occurs "automatically" by insertion of the adapter bank 160 into the interior cavity 118 of the bezel 112 and does not require any tools. Moreover, while it may be possible to remove an adapter bank 160 from the bezel 112, such as by depressing each of the spring arms 210 toward their retracted positions, once the adapter bank 160 is connected the bezel 112, the adapter bank 160 is not intended to be removed from the bezel 112. Instead, the adapter bank 160 and bezel 112 are intended to form a unit assembly, i.e., the adapter bank 160 and bezel 112 are intended to be handled together as a unit. The purpose of this feature will be described in more detail below.

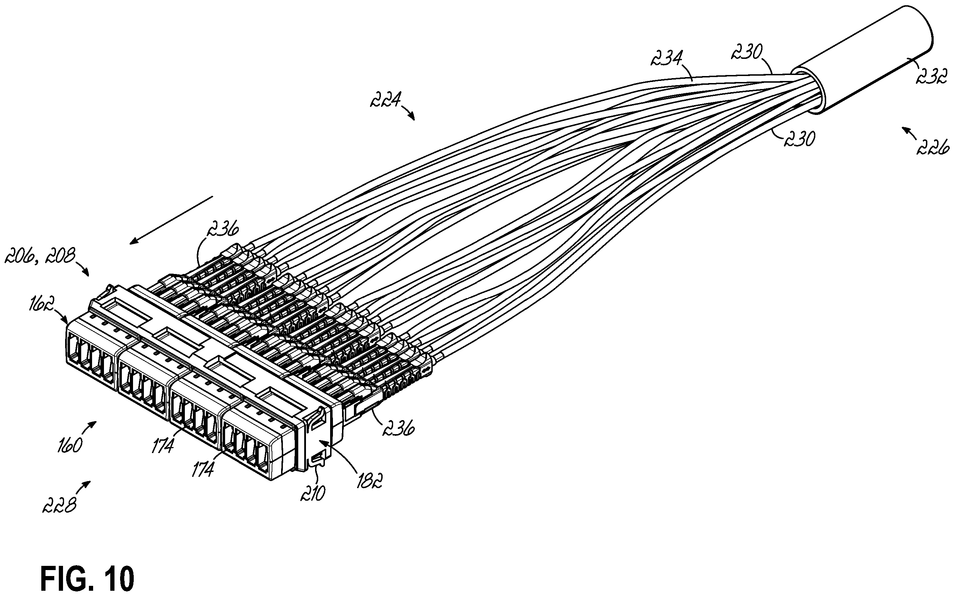

The use of the bezels 112 and adapter banks 160 in accordance with embodiments of the disclosure, and the advantages that these provide to manufacturers, installers and the like, will now be described. Fig. 10 illustrates a cable assembly 224 in accordance with an aspect of the disclosure. The fiber optic cable assembly 224 includes a fiber optic cable 226 carrying a plurality of optical fibers (not shown) and a connection interface 228 at an end of the fiber optic cable 226 for connecting the fiber optic cable 226 to another device (e.g., another fiber optic cable). In one embodiment, the fiber optic cable 226 includes a plurality of cable subunits 230 carried within an outer sheath or jacket 232 of the fiber optic cable 226. Each of the plurality of subunits 230 includes one or more optical fibers, and preferably a plurality of optical fibers, carried within an outer subunit jacket 234. Each of the subunits 230 is terminated by one or more fiber optic connectors 236 configured for insertion into another device, such as one of the ends of the adapter bank 160. Any conventional, or yet to be developed, optical connector or connectorization scheme may be used in accordance with the present disclosure, including, but not limited to simplex or duplex connectors (e.g., LC connectors) and multi-fiber connectors (e.g., MPO connectors). For example, the fiber optic connectors 236 may include MPO (multi-fiber push on) connectors, which are configured for multi-fiber cables including multiple sub-units of optical fibers (e.g., between four to 24 optical fibers). In other embodiments, the fiber optic connectors 236 may be a different type of multi-fiber connector, such as an SN-MT connector commercially available from Senko Advanced Components, Inc. or an MMC connector commercially available from US Conec Ltd.

Unlike most fiber optic cable assemblies currently available, in accordance with an aspect of the disclosure, the connection interface 228 of the fiber optic cable assembly 224 may include the adapter bank 160. In current installation practice, the adapter bank typically forms part of the distribution frame where two fiber optic cables are being connected. A technician or the like, then inserts fiber optic connectors into the connector ports on both sides of the adapter bank to connect the fiber optic cables. The feature of a bezel, and the ability to easily connect an adapter bank to the bezel (such as through a snap-fit connection) allows for a different approach. More particularly, the bezel/adapter bank connection allows the adapter bank to be initially part of the fiber optic cables on one side of the distribution frame, instead of initially part of the distribution frame itself to which the fiber optic cables are being attached. Providing the adapter bank(s) as part of the fiber optic cables instead of as part of the distribution frame results in a number of advantages regarding installation. For example, and as an initial matter, the fiber optic cables 226 may be pre-connectorized to avoid field assembly of the fiber optic connectors 236 to the fiber optic cable 226. Additionally, however, the fiber optic connectors 236 may be pre-installed, for example, in the rear connector ports 176 at the front end wall 170 of the adapter bank 160. Thus, the connector/adapter bank connections may be tested prior to deployment in the field and any identified defects may be resolved prior to installing of the fiber optic cable in the field.

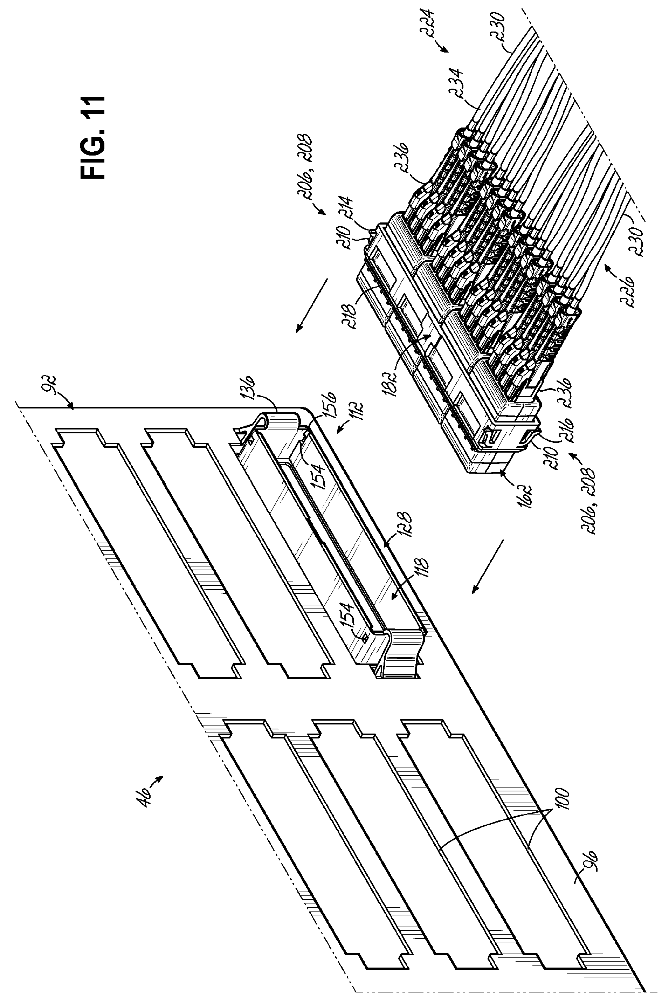

Furthermore, by providing one or more adapter banks 160 as part of the connection interface 228 of the fiber optic cable assembly 224, a large number of fiber optic connections may be made with fewer steps by the technician. By way of example and as illustrated in Fig. 11, at the installation/field site, such as at the data center 10, a technician would remove the fiber optic cable assembly 224 from its package, route the fiber optic cable 226 according to the cable-routing architecture, and then connect the one or more adapter banks 160 to respective bezels 112 already received in the plurality of ports 100 in the at least one panel 92 at the intermediate distribution frame 34. No longer does the technician have to individually connect the fiber optic connectors 236 to the adapter banks 160 on both side of the adapter banks 160. That task was already done in the factory or manufacturing setting. Accordingly, the amount of time it takes to optically connect fiber optic cables across the intermediate distribution frame 34 may be reduced. And given the large number of optical connections that occur at the intermediate distribution frame 34, and within a data center 10 in general, the amount of installation time for the data center 10 may be significantly reduced.

As noted above, during installation, the bezels 112 may be inserted into their respective ports 100 in the at least one panel 92 of the intermediate distribution frame 34. In one embodiment, the bezels 112 may be pre-installed within the plurality of ports 100 in the at least one panel 92, such as in the factor setting. Thus, the technician would simply remove the at least one panel 92 from its package and install the at least one panel 92 in the intermediate distribution frame 34 as was described above. Next, the installer would insert the one or more adapter banks 160 associated with the one or more fiber optic cable assemblies 224 in respective bezels 112 in the manner described above. Again, this is illustrated in Fig. 11. In the application of an intermediate distribution frame 34 of a data center 10, and in an exemplary embodiment, the indoor cables 24 (e.g., see Figs. 2 and 3) may be configured as the fiber optic cable assembly 224 having connection interface 228. Subsequently, the technician would start inserting fiber optic connectors (not shown) associated with the row distribution cables 42 into the front connector ports 174 associated with the front end wall 170 of the one or more adapter banks 160 connected to the bezels 112 in the at least one panel 92.

In some cases, there is a poor optical connection across an adapter bank that requires corrective action. In many cases, the connector port or the connector has debris that interferes with the optical signal being transferred across the adapter bank. In these cases, the technician will have to remove a connector and clean the port and/or connector to remove the debris. In some cases, the connector and/or connector port that requires cleaning is on a rear side 38 of the intermediate distribution frame 34 (i.e., from the indoor cable side of the intermediate distribution frame 34). To address this situation in conventional intermediate distribution designs, the technician would have to move from the front side of the intermediate distribution frame to the rear side of the intermediate distribution frame to access the port connector and/or connector port. As noted above, in many cases, the intermediate distribution frame is elevated above the row and moving back-and-forth between the front side of the intermediate distribution frame and the rear side of the intermediate distribution frame is frustrating and time consuming.

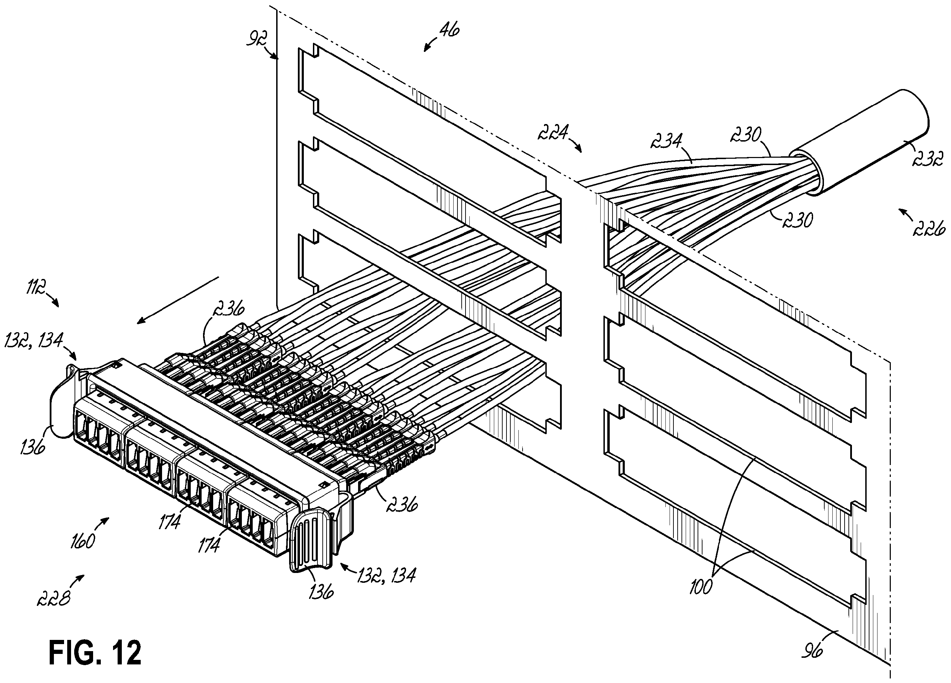

Aspects of the present disclosure address this issue and allows technicians to clean connectors and/or connector ports from one side of the intermediate distribution frame (i.e., the front side). In this regard, Fig. 12 illustrates this advantage of the bezel/adapter bank connection according to the present disclosure. As noted above, once the adapter bank 160 is inserted into a bezel 112, it forms a unit assembly within the port 100 of the at least one panel 92. In the event that a technician needs to access a rear connector port 176 and/or an associated rear fiber optic connector 236 in the rear connector port 176, the technician would access the finger tabs 138 on the bezel 112, which are visible and available from the front side 40 of the intermediate distribution frame 34, squeeze the finger tabs 138 inwardly toward the release position, and pull the bezel 112, the attached adapter bank 160, and the attached rear fiber optic connectors 236 from the at least one panel 92 as a unit. In this way, and as illustrated in Fig. 12, the rear side 204 of the adapter bank 160 is now accessible by the technician. Thus, the technician may access a rear fiber optic connector 236 and/or its associated rear connector port 176 without the technician having to move from the front side 40 of the intermediate distribution frame 34 to the rear side 38 of the intermediate distribution frame 34. Similar to the above, this allows technicians to troubleshoot fiber optic connections much more quickly, thus reducing the overall installation time associated with the data center 10.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A distribution frame of a fiber optic network for connecting fiber optic cables, comprising:
at least one host attached to the distribution frame, the at least one host including a plurality of host ports, each of the plurality of host ports configured to receive an adapter bank therein; and
a plurality of bezels, wherein each of the plurality of bezels comprises:
a bezel body; and
at least one bezel fastener connected to the bezel body,
wherein each of the plurality of bezels is releasably received in a respective one of the plurality of host ports in the at least one host by the at least one bezel fastener, and
wherein each of the plurality of bezels is configured to receive the adapter bank in a snap-fit connection in order to mount the adapter bank to the at least one host of the distribution frame.

2. The distribution frame of claim 1, wherein each of the plurality of bezels includes a generally rectangular bezel body defining an interior cavity, and wherein the interior cavity is configured to receive the adapter bank in the snap-fit connection.

3. The distribution frame of claim 2, wherein the bezel body of each of the plurality of bezels includes at least one adapter fastener interface for receiving at least one adapter fastener associated with the adapter bank in the snap-fit connection.

4. The distribution frame of claim 3, wherein the at least one adapter fastener interface includes at least one pair of apertures on opposed sides of the bezel body.

5. The distribution frame of any of claims 2-4, wherein the at least one bezel fastener includes a pair of bezel fasteners on opposed sides of the bezel body.

6. The distribution frame of any of preceding claims, wherein the at least one bezel fastener includes at least one bezel clip, the at least one bezel clip being moveable between a release position, where the bezel is releasable from the respective one of the plurality of host ports, and a retained position, where the bezel is retained in the respective one of the plurality of host ports.

7. The distribution frame of claim 6, wherein the at least one bezel clip is biased toward the retained position.

8. The distribution frame of claim 6 or 7, wherein the at least one bezel clip comprises:
a spring arm having a first end connected to the bezel body and a second end opposite the first end; and
a finger tab at the second end of the spring arm for moving the spring clip from the retained position to the release position.

9. The distribution frame of any of the preceding claims, wherein each of the plurality of bezels is configured for only unidirectional insertion into a respective one of the plurality of host ports.

10. A fiber optic network, comprising:
at least one first fiber optic cable including a plurality of first fiber optic connectors;
at least one second fiber optic cable including a plurality of second fiber optic connectors;
the distribution frame of any of claims 1-9;
a plurality of adapter banks, each of the plurality of adapter banks being received in a respective one of the plurality of bezels through the snap-fit connection, each of the plurality of adapter banks including a first side having a plurality of first connector ports and a second side having a plurality of second connector ports,
wherein each of the plurality of first fiber optic connectors is connected to a respective one of the plurality of first connector ports on the first side of the plurality of adapter banks, and
wherein each of the plurality of second fiber optic connectors is connected to a respective one of the plurality of second connector ports on the second side of the plurality of adapter banks.

11. The fiber optic network of claim 10, wherein each of the plurality of adapter banks comprises:
an adapter body defining the first side with the plurality of first connector ports and the second side with the plurality of second connector ports; and
an adapter bank band disposed about the adapter body,
wherein the adapter bank band includes an adapter bank band body and at least one adapter fastener for connecting the adapter bank to the at least one adapter fastener interface on the respective one of the plurality of bezels.

12. The fiber optic network of claim 11, wherein the at least one adapter fastener includes at least one adapter clip, the at least one adapter clip being moveable between an extended position, where the adapter bank is engaged with the respective one of the plurality of bezels, and a retracted position, where the adapter bank is disengaged from the respective one of the plurality of bezels.

13. The fiber optic network of claim 12, wherein the at least one adapter clip comprises:
a spring arm having a first end connected to the adapter bank band body and a second end opposite the first end; and
a detent at the second end of the spring arm.

14. The fiber optic network of any of claims 10-13, wherein each of the plurality of adapter banks is configured for only unidirectional insertion into a respective one of the plurality of bezels.

15. The fiber optic network of any of claims 10-14, wherein each of the plurality of adapter banks includes a plurality of separate adapters bound together by the adapter bank band, and wherein each of the plurality of separate adapters include a first side with at least one first connector port and a second side with at least one second connector port.
